Europäisches Patentamt

European Patent Office

Office européen des brevets

(11) Veröffentlichungsnummer: **0 408 936 A2**

# (12) EUROPÄISCHE PATENTANMELDUNG

(21) Anmeldenummer: **90112208.5**

(22) Anmeldetag: **27.06.90**

(51) Int. Cl.5: **H03K 5/22**

(30) Priorität: **18.07.89 DE 3923727**

(43) Veröffentlichungstag der Anmeldung:
**23.01.91 Patentblatt 91/04**

(84) Benannte Vertragsstaaten:
**FR GB**

(71) Anmelder: **WANDEL & GOLTERMANN GMBH & CO CO CO**
**Postfach 1262 Mühleweg 5**
**D-7412 Eningen u.A.(DE)**

(72) Erfinder: **Kreutzer, Hans, Dr. Ing.**
**Carmenstrasse 44**
**D-7410 Reutlingen 23(DE)**

(74) Vertreter: **Kucher, Hans, Dipl.-Ing.**
**Richard-Strauss-Weg 4**
**D-7410 Reutlingen(DE)**

(54) **Verfahren zum Auffinden eines Zeichenmusters in einem Datenstrom.**

(57) In modernen Datenkommunikationssystemen ist es häufig erforderlich, in einem Datenstrom vorgegebene Bitmuster oder Zeichenmuster zu erkennen. Es wird hierfür ein Verfahren vorgeschlagen, bei dem die zu suchende Bitfolge als Bitmuster in einem Speicher abgelegt wird. Im Speicher werden weitere Bitmuster abgelegt, die in Abhängigkeit von den im Datenstrom auftretenden Zeichen aus dem Speicher ausgelesen und einem Schieberegister parallel zugeführt werden. Im Schieberegister wird eine Kennung von der ersten Stufe zu nachfolgenden Stufen fortlaufend weitergegeben, solange eine Übereinstimmung der untersuchten Bitfolge mit dem gesuchten Bitmuster gegeben ist. Die letzte Stufe des Schieberegisters kennzeichnet dann die Übereinstimmung mit dem gesuchten Bitmuster.

EP 0 408 936 A2

# VERFAHREN ZUM AUFFINDEN EINES ZEICHENMUSTERS IN EINEM DATENSTROM

Die Erfindung betrifft ein Verfahren zum Auffinden eines Zeichenmusters in einem Datenstrom gemäß der Gattung des Patentanspruchs 1 und eine Schaltungsanordnung zur Durchführung des Verfahrens.

In modernen Datenkommunikationssystemen findet der Auf-und Abbau von Verbindungen sowie der Austausch der Daten mit Hilfe komplexer Protokolle statt. Die Steuersowie Adressinformationen werden dabei zusammen mit den Daten auf der gleichen Leitung übertragen. Es ergibt sich somit die Notwendigkeit zur schnellen Analyse des Datenstromes, um bestimmte Bit- und Zeichensequenzen zu detektieren, insbesondere dadurch, daß die Taktraten in den Datenkommunikationssystemen immer größer werden.

Bei der Übertragung von Daten besteht häufig die Forderung, in dem Datenstrom vorgegebene Bitmuster zu erkennen. Ein solches Bitmuster kann eine bestimmte Information darstellen, die für eine Verarbeitung der im Datenstrom enthaltenen Daten wesentlich sein kann.

Zur Erkennung eines bestimmten Bitmusters in einem binär codierten Datenstrom können die einzelnen Bits in einem Zwischenspeicher abgelegt werden, dessen Inhalt mit den Bits eines gesuchten Bitmusters ständig vergli chen wird. Bei vollständiger Übereinstimmung könnte dann eine Kennung erzeugt werden, die diese Übereinstimmung des momentan im Datenstrom auftretenden Bitmusters mit dem gesuchten Bitmuster kennzeichnet. Zur Durchführung eines derartigen Vergleichs ist eine verhältnismäßig umfassende Vergleichslogik erforderlich, die somit einen unerwünscht hohen Aufwand darstellt.

Der Erfindung liegt die Aufgabe zugrunde, ein Verfahren zum Auffinden eines vorgegebenen Zeichenmusters in einem Datenstrom zu schaffen, welches mit möglichst geringem Schaltungsaufwand realisierbar ist.

Die Lösung dieser Aufgabe wird mit einem Verfahren erhalten, wie es im Patentanspruch 1 gekennzeichnet ist. Bei diesem Verfahren wird in einen adressierbaren Speicher zu jeder Adresse ein binär codiertes Wort abgelegt, wobei die Adresse jeweils einem bestimmten Zeichen entspricht. Das abgespeicherte binär codierte Wort gibt dabei im Bezug auf das zugehörige Zeichen an, an welcher Stelle des gesuchten Zeichenmusters dieses Zeichen im Zeichenmuster auftritt. An den entsprechenden Stellen ist im binär codierten Wort eine "1" vorgesehen, die somit das Vorhandensein des zugehörigen Zeichens markiert. Die binär codierten Wörter werden durch die im Datenstrom ankommenden Zeichen adressiert und parallel ausgelesen und zu den zugehörigen Stufen des Schieberegisters übertragen. Im Schieberegister wird bei Übereinstimmung des ersten Zeichens mit dem gesuchten Zeichenmuster in der ersten Stufe eine entsprechende Kennung erzeugt, die so lange zu den weiteren Stufen weitergegeben wird, solange eine ununterbrochene Übereinstimmung der im Datenstrom aufeinanderfolgend ankommenden Zeichen mit dem gesuchten Zeichenmuster gegeben ist. Besteht das gesuchte Zeichenmuster aus beispielsweise vier Zeichen, so gibt die vierte Stufe des Schieberegisters die die Übereinstimmung kennzeichnende Kennung ab, wenn das gesuchte Zeichenmuster gefunden ist. Mit dem mehrstufigen Schieberegister in Verbindung mit einem adressierbaren Speicher kann der Datenstrom auf das Vorhandensein eines Bitmusters oder auf das Vorhandensein eines vorgegebenen Zeichenmusters geprüft werden. Das erfindungsgemäße Verfahren hat somit den Vorteil, daß es mit einfachem Schaltungsaufwand realisierbar ist und problemlos das Auffinden eines Bitmusters oder eines Zeichenmusters durchgeführt werden kann.

Bei dem Verfahren zum Auffinden eines Zeichenmusters können die im Speicher abgelegten binär codierten Wörter so aufbereitet sein, daß an bestimmten Stellen des Zeichenmusters mehrere Zeichen zulässig sind. Dies erfolgt auf einfache Weise dadurch, daß an den Adressen, die den verschiedenen, zugelassenen Zeichen entsprechen, an der gewünschten Stelle in den dort abgelegten binär codierten Wörtern eine "1" eingeschrieben wird. Die Schaltung muß dabei in keiner Weise verändert werden.

Der Datenstrom kann die zu prüfenden Zeichen in binär codierter Form enthalten, wobei jedem binär codierten Zeichen eine zugehörige Zeichenadresse im Speicher zugeordnet ist. Die Adressierung des Speichers kann dabei durch an sich bekannte Adressierverfahren in direkter oder indirekter Form erfolgen.

Der grundsätzliche Aufbau mit einem mehrstufigen Schieberegister kann auch zur Durchführung eines Verfahrens zum Auffinden eines aus einer Anzahl von N Bits bestehenden Bitmuster gemäß Anspruch 5 Verwendung finden. Die im Datenstrom auftretende Bitfolge wird in der Weise mit einem gesuchten Bitmuster verglichen, daß bei Übereinstimmung des ersten Bits eine diese Übereinstimmung kennzeichnende Kennung in eine erste Stufe eines Schieberegisters eingegeben wird. Diese Kennung wird im Schieberegister so lange von Stufe zu Stufe weitergegeben, solange eine ununterbrochene Übereinstimmung der ankommenden Bits mit den entsprechenden Bits des gesuchten Bitmusters vorliegt. Die Weitergabe der Kennung wird im Schieberegister jedoch dann unterbrochen, wenn bei einem einzelnen Bit die erforderliche Übereinstimmung nicht vorliegt. Das Verfahren ist mit einem einfachen Schieberegister realisierbar, dessen zweite und jede weitere Stufe einen Vorbereitungseingang besitzt, der jeweils durch ein UND-Gatter gebildet ist. Diese sehr einfache Schaltung hat weiterhin den Vorteil, daß keine zusätzliche Verknüpfungsschaltung erforderlich ist, vielmehr genügt es, die N-te Stufe des Registers auf das Vorhandensein einer entsprechenden Kennung zu prüfen. Tritt an der N-ten Stufe des Registers die Kennung auf, so wird dadurch signalisiert, daß eine Anzahl von N aufeinanderfolgenden Bits im Datenstrom mit dem gesuchten Bitmuster übereinstimmen, wobei das gesuchte Bitmuster ebenfalls eine Anzahl von N Bits umfaßt.

Besonders vorteilhaft ist es, ein zu suchendes binär codiertes Bitmuster in einem Speicher an der mit "1" gekennzeichneten Adresse abzuspeichern und das dazu komplementäre Bitmuster an der Adresse "0" abzuspeichern. Der Suchvorgang kann nun auf sehr einfache Weise durchgeführt werden, wobei die im Datenstrom auftretenden Bits jeweils die Adresse angeben, aus der das zugehörige Bitmuster ausgelesen und parallel zu den Stufen des Schieberegisters zu übertragen sind. Zur Durchführung des Verfahrens genügt somit ein Speicher mit zwei Adressen und ein Schieberegister, welches in der bereits beschriebenen Weise mit Vorbereitungseingängen versehen ist. An der N-ten Stufe des Schieberegisters tritt eine die Übereinstimmung kennzeichnende Kennung auf, wenn eine Anzahl von N aufeinanderfolgenden Bits des Datenstroms mit dem aus N Bits bestehenden gesuchten Bitmuster übereinstimmen.

Ein zu suchendes Bitmuster kann auch so vorgegeben sein, daß an einer oder mehreren Stellen des Bitmusters sowohl eine "0" als auch eine "1" zugelassen ist. In diesem Fall genügt es, an den betreffenden Stellen der beiden im Speicher abgelegten Bitmuster jeweils eine "1" vorzusehen. Dies hat zur Folge, daß an der entsprechenden Stufe des Schieberegisters in jedem Fall eine Weitergabe der Kennung erfolgt, unabhängig von der Wertigkeit des an dieser Stelle des Datenstrom auftretenden Bits.

Das Schieberegister kann grundsätzlich auch mehr Stufen aufweisen als Bits in einem gesuchten Bitmuster vorgesehen sind. Vorzugsweise wird jedoch die Anzahl der Stufen an die Anzahl der Bits im gesuchten Bitmuster angepaßt.

Die Stufen des Schieberegisters können durch D-Flip-Flops gebildet sein, wobei der Ausgang einer vorhergehenden Stufe über ein UND-Gatter mit dem Eingang einer nachfolgenden Stufe verbunden ist. Der andere Eingang des UND-Gatters steht mit der entsprechenden Stelle des Speichers in Verbindung, wo die Bitmuster bzw. die codierten Wörter abgelegt sind. Ein derartiger Schaltungsaufbau läßt sich sehr einfach und kostengünstig realisieren.

Die Erfindung wird nachfolgend anhand der Zeichnungen näher erläutert. Es zeigen:
Figur 1 ein Blockschaltbild einer Schaltungsanordnung zur Durchführung des Verfahrens zum Auffinden eines Bitmusters in einem Datenstrom,
Figur 2 ein Flußdiagramm zur Veranschaulichung des Verfahrens zum Auffinden eines Bitmusters,
Figur 3 ein Blockschaltbild einer Schaltungsanordnung zur Durchführung des Verfahrens zum Auffinden eines Zeichenmusters in einem Datenstrom und
Figur 4 ein Flußdiagramm zur Veranschaulichung des Verfahrens zum Auffinden eines Zeichenmusters in einem Datenstrom.

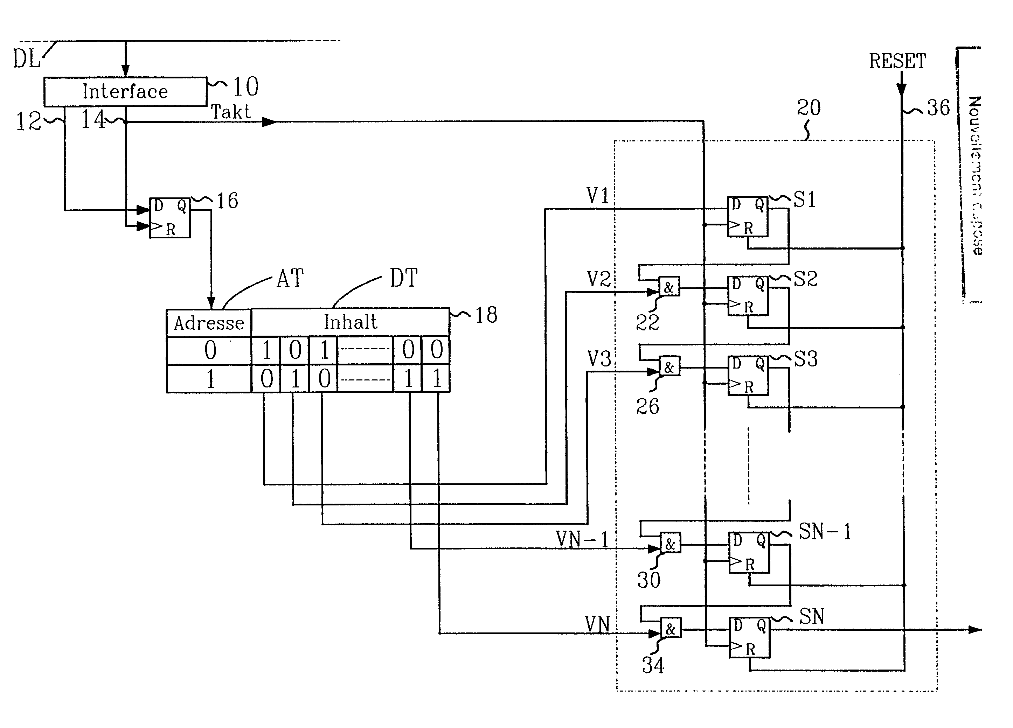

In Figur 1 ist eine mögliche schaltungstechnische Realisierung einer Bitsequenzsuche angegeben. Eine auf einer Datenleitung DL übertragene Bitfolge kann mit dieser Schaltungsanordnung auf ein vorgegebenes Bitmuster untersucht werden.

Die Datenleitung DL steht mit einer Schnittstelle 10 in Verbindung, die häufig als Interface bezeichnet wird. Die Schnittstelle 10 gibt über eine Signalleitung 12 die zu untersuchenden Bits an ein als D-Flip-Flop ausgebildetes Speicherelement 16 weiter, welches an eine Taktleitung 14 angeschlossen ist. Auf der Taktleitung 14 tritt ein Taktsignal auf, welches dem Takt auf der Datenleitung DL entspricht. Der Ausgang des Speicherelements 16 ist mit dem Eingang eines Adressteils AT eines Speichers 18 verbunden. In dessen Datenteil DT sind an den beiden Adressen "0" und "1" Bitmuster abgelegt, wobei an der Adresse "1" das zu suchende Bitmuster abgespeichert ist. Im Ausführungsbeispiel sei das zu suchende Bitmuster wie folgt gekennzeichnet:
010...11
An der Adresse "0" ist das dazu komplementäre Bitmuster abgespeichert, welches somit wie folgt lautet:
101...00
Der Datenteil des Speichers 18 umfaßt N Stellen, wobei das zu suchende Bitmuster ebenfalls eine Anzahl N Bits umfaßt.

Der Datenteil des Speichers 18 ist ausgangsseitig mit einem Schieberegister 20 über parallele Verbindungsleitungen V1 bis VN verbunden. Über die Verbindungsleitungen kann das vorgegebene Bitmuster B1 oder das dazu komplementäre Bitmuster B0 parallel zum Schieberegister 20 übertragen werden. Welches der beiden Bitmuster übertragen wird, bestimmt das jeweils auf der Datenleitung DL momentan auftretende Bit, da dieses Bit über die Schnittstelle 10 und über das Speicherelement 16 zum Adressteil AT übertragen wird, wodurch die Adressierung des Speichers 18 erfolgt.

Das Schieberegister 20 besteht aus einer Anzahl N Stufen S1, S2, ...SN, die jeweils von einem D-Flip-Flop gebildet werden. Außer der Stufe S1 besitzen sämtliche folgenden Stufen S2 bis SN einen durch UND-Gatter 22 bis 34 gebildete Eingänge, an denen die Verbindungsleitungen V2 bis VN angeschlossen sind. Die jeweils anderen Eingänge der UND-Gatter 22 bis 34 sind mit dem Ausgang Q der jeweils vorhergehenden Stufe verbunden. Sämtliche Stufen sind an ihrem Rücksetzeingang über eine Rücksetzleitung 36 rücksetzbar, d.h. sämtliche Ausgänge der Stufen S1 bis SN lassen sich über die Rücksetzleitung 36 gemeinsam auf "0" setzen. Alle zur Abspeicherung von Signalen verwendeten Speichermittel und Registerstufen werden von dem auf der Taktleitung 14 auftretenden Bittakt getaktet.

Das Suchverfahren wird nachfolgend beschrieben. Vor Beginn des Suchvorganges wird eine Initialisierung durch die Rücksetzleitung 36 durchgeführt. Dadurch wird in die Stufen S1 bis SN eine "0" eingeschrieben.

Mit einem Bittakt auf der Taktleitung 14 wird ein Bit von der Datenleitung DL über die Leitung 12 in das Speicherelement 16 eingeschrieben. Dieses abgespeicherte Bit adressiert nun den Speicher 18. Das Ausgangssignal der ersten Stelle des aus dem Datenteil DT abgerufenen Bitmusters gelangt über die Verbindungsleitung V1 direkt zum Eingang der Stufe S1 und wird dort mit dem nächsten Bittakt abgespeichert. Wurde beispielsweise das unter der Adresse "1" abgelegte Bitmuster ausgelesen, so tritt am Ausgang der Stufe S1 eine "0" auf. Das auf der Datenleitung DL angekommene Bit stimmte also nicht mit dem ersten Bit des gesuchten Bitmusters überein, da das erste Bit eine "0" sein muß. Tritt nun auf der Datenleitung tatsächlich eine "0" auf, so wird dadurch im Adressteil AT die Adresse "0" ausgewählt, unter der im Datenteil DT das komplementäre Bitmuster abgespeichert ist. Die erste Stelle des komplementären Bitmusters weist eine "1" auf, die über die Verbindungsleitung V1 zur Stufe S1 übertragen wird. Am Ausgang dieser Stufe S1 tritt diese "1" mit dem nächsten Bittakt auf, wodurch gekennzeichnet wird, daß bezüglich des ersten Bits eine Übereinstimmung vorliegt. Die an der Stufe S1 auftretende "1" ist somit eine die Übereinstimmung kennzeichnende Kennung.

Die am Ausgang der Stufe S1 auftretende "1" legt auch am UND-Gatter 22 an. Wird mit dem nächsten Bittakt das nachfolgende Bit des zu untersuchenden Datenstroms zum Adressteil AT übertragen und besitzt dieses Bit die Wertigkeit "1", so wird dadurch das unter der Adresse "1" abgespeicherte Bitmuster an die Verbindungsleitungen V1 bis VN angelegt. Auf diese Weise gelangt über die Verbindungsleitung V2 zum einen Eingang des UND-Gatters 22 eine "1", wobei am anderen Eingang des UND-Gatters 22 ebenfalls die an der Stufe S1 auftretende "1" anliegt. Durch die UND-Verknüpfung im UND-Gatter 22 gelangt nun an den Eingang D der zweiten Stufe S2 eine logische "1", die mit Auftreten des Bittaktes auf der Taktleitung 14 zum Ausgang der Stufe S2 übertragen wird. Die am Ausgang der Stufe S2 auftretende "1" kennzeichnet damit, daß das erste und das zweite Bit der zu überprüfenden Bitfolge mit dem gesuchten Bitmuster übereinstimmt. Die ausgangsseitige "1" wird zu weiteren Stufen S3 bis SN übertragen, wenn die im Datenstrom auftretende Bitfolge mit dem gesuchten Bitmuster ohne Unterbrechung übereinstimmt. Eine am Ausgang der Stufe SN auftretende "1" kennzeichnet somit die Übereinstimmung zwischen N aufeinanderfolgenden Bits im Datenstrom mit den N Bits des gesuchten Bitmusters. Das gesuchte Bitmuster ist somit bei Auftreten einer "1" am Ausgang der Stufe SN im Datenstrom der Datenleitung DL gefunden.

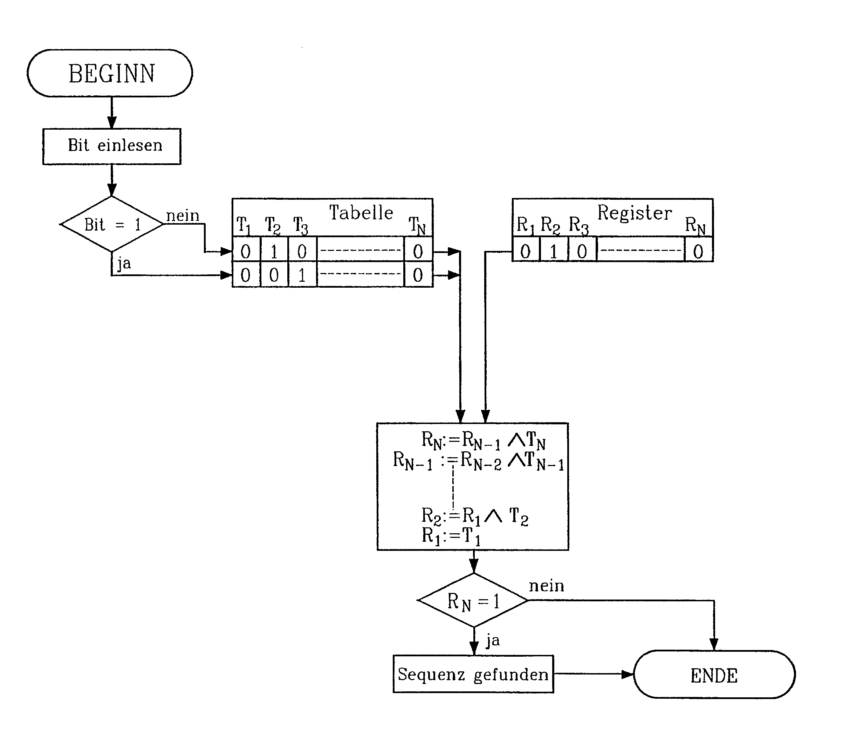

In Figur 2 ist ein Flußdiagramm dargestellt, anhand dessen das Suchverfahren ebenfalls erläutert wird. Der hier dargestellte Ablauf kann z.B. durch ein Maschinenprogramm realisiert werden. Die Untersuchung eines Bits beginnt mit dem Einlesen des Bits und der Entscheidung aufgrund des Wertes, welche von zwei Tabellen zu verwenden ist. Die Länge und der Inhalt, repräsentiert durch T1, T2, ...TN, dieser beiden Tabellen ist identisch mit den im Datenteil des Speichers 18 von Figur 1 abgespeicherten Bitmustern. Die in Figur 1 realisierten Stufen S1 bis SN werden hier durch ein Register mit N Zellen R1 bis RN ersetzt. R1 entspricht der Stufe S1 von Figur 1, R2 entspricht der Stufe S2, usw. Die Zellen R1 bis RN müssen vor Beginn der Sequenzsuche mit dem Wert "0" gefüllt werden. Der Ablauf der Bitsequenzsuche sieht damit folgendermaßen aus:

Es wird zunächst ein Bit eingelesen und aufgrund des Wertes eine Tabelle mit den Zellen T1 bis TN ausgewählt. Die Zelle RN wird neu berechnet, indem der Wert der vorhergehenden Zelle RN-1 konjunktiv mit der Zelle TN verknüpft wird. In entsprechender Weise wird die Zelle RN-1 neu berechnet, indem der Wert der unmittelbar vorhergehenden Zelle RN-2 konjunktiv mit dem Wert der Zelle TN-1 verknüpft wird. Diese Berechnung wird in entsprechender Weise durchgeführt, bis sich der Wert R1 aus dem Wert der Zelle T1 ergibt. Falls der Wert RN die Wertigkeit "1" besitzt, so wird dadurch markiert, daß die gesuchte Bitsequenz gefunden wurde. Danach kann das Unterprogramm zur Bitsequenzsuche verlassen werden und mit dem nächsten zu untersuchenden Bit wieder aufgerufen werden.

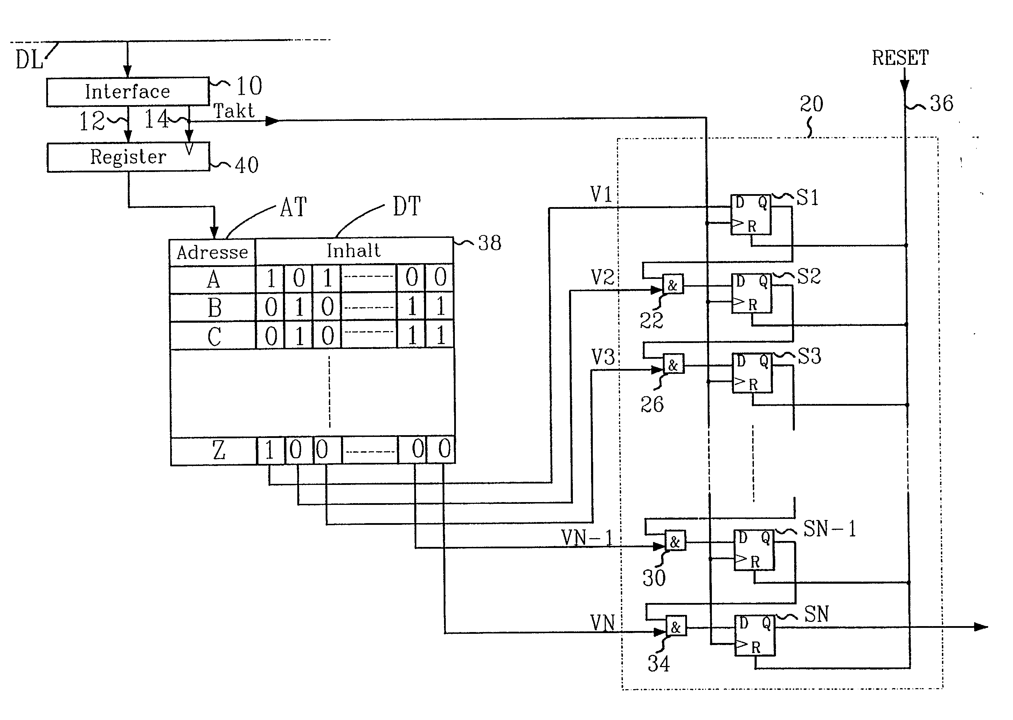

In Figur 3 ist ein Blockschaltbild angegeben, mit dem das Verfahren zum Auffinden eines Zeichenmusters in einem Datenstrom durchgeführt werden kann. Das hier dargestellte Blockschaltbild unterscheidet sich im wesentlichen gegenüber dem in der Figur 1 dargestellten Blockschaltbild durch einen größeren Speicher 38, dessen Adressteil AT mehrere Zeichen A bis Z umfaßt. Soll nun ein Datenstrom auf der Datenleitung DL auf ein bestimmtes Zeichenmuster geprüft werden, so wird zuvor im Datenteil DT des Speichers 38 an den entsprechenden Adressen jeweils ein binär codiertes Wort abgespeichert, in welchem die Stellen mit einer "1" besetzt sind, an denen das zugehörige Zeichen im Zeichenmuster auftritt. Soll beispielsweise das Zeichenmuster
ABB
gesucht werden, so genügt ein Datenteil mit drei Stellen, in die folgende Wörter abgespeichert werden.
Unter der Adresse A: 100
Unter der Adresse B: 011
Der Inhalt im Datenteil DT besagt somit, daß das Zeichen A im gesuchten Zeichenmuster nur an der ersten Stelle auftritt, während das Zeichen B an der zweiten und an der dritten Stelle im gesuchten Zeichenmuster auftritt.

Der in Figur 3 dargestellte Speicher 38 umfaßt im Datenteil DT N Stellen, wie dies auch beim Speicher 18 von Figur 1 vorgesehen ist.

Ein auf der Datenleitung DL auftretendes Zeichen wird über die Schnittstelle 10 einem Register 40 zugeführt, welches mit dem Zeichentakt, der auf der Taktleitung 14 auftritt, diese vom Register 40 zum Adressteil AT überträgt. Die ankommenden Zeichen adressieren auf diese Weise den Speicher 38 und veranlassen, daß an der adressierten Speicherstelle der dort abgelegte Inhalt über Verbindungsleitungen V1 bis VN zum Schieberegister 20 parallel übertragen wird. Die Funktion des Sohieberegisters 20 und dessen Aufbau entsprechen dem in Figur 1 dargestellten Schieberegister.

Der Ablauf der Zeichensuche wird nachfolgend beschrieben. Vor Beginn des Suchvorganges wird eine Initialisierung durch die Rücksetzleitung 36 vorgenommen. Dadurch werden sämtliche Stufen S1 bis SN des Schieberegisters 20 auf "0" gesetzt.

Mit einem auf der Taktleitung 14 auftretenden Zeichentakt wird ein Zeichen von der Datenleitung DL über die Leitung 12 in das Register 40 eingeschrieben. Das abgespeicherte Zeichen adressiert nun den Speicher 38, wobei das Ausgangssignal der ersten Zelle des adressierten Speicherinhalts unverändert an die Stufe S1 des Schieberegisters 20 gelangt. Mit dem nächsten Zeichentakt wird der Inhalt dieser Zelle in die Stufe S1 übernommen, so daß an deren Ausgang Q eine "1" auftritt, wenn die genannte Zelle die Wertigkeit "1" aufgewiesen hat. Wie bei Figur 1 beschrieben wird diese "1" vom Ausgang der Stufe S1 zur nächsten Stufe S2 weitergegeben, wenn die im Datenstrom auftretenden Zeichen mit der Zeichenfolge im gesuchten Zeichenmuster übereinstimmt. Tritt am Ausgang der Stufe SN eine "1" auf, so wird dadurch die Übereinstimmung zwischen einer im Datenstrom gefundenen Zeichenfolge mit dem gesuchten Zeichenmuster gekennzeichnet.

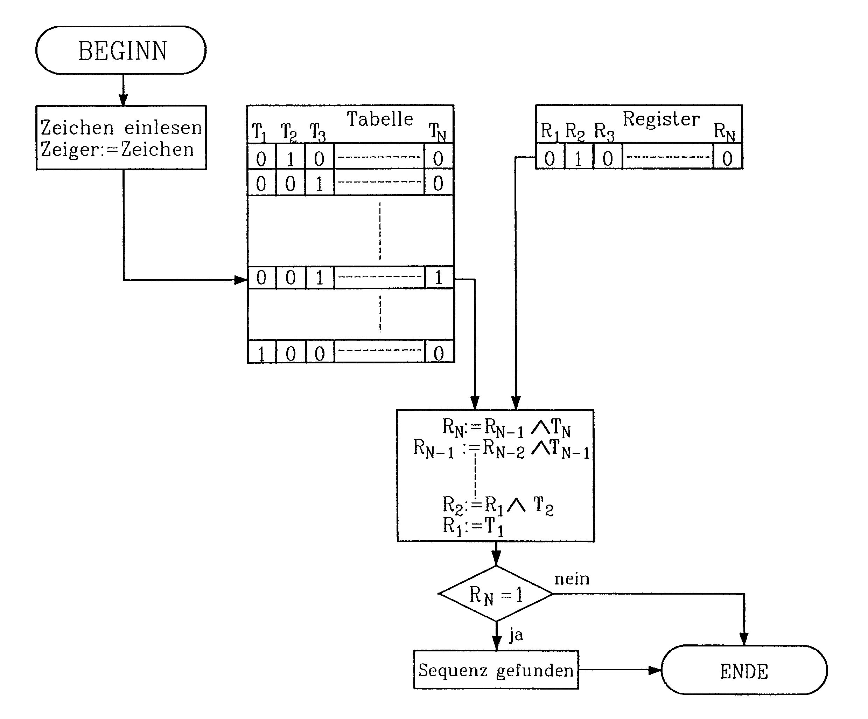

In Figur 4 ist die Realisierung des Verfahrens zur Auffindung eines Zeichenmusters anhand eines Flußdiagramms näher erläutert. Der hier dargestellte Ablauf kann z.B. durch ein Maschinenprcgramm eines Rechners realisiert werden. Die Untersuchung eines Zeichens beginnt mit dem Einlesen eines im Datenstrom auftretenden Zeichens, welches die Adresse einer Tabelle angibt. Das Zeichen dient somit praktisch als Zeiger, der auf die entsprechende Zeile in der Tabelle hinweist. In der dem Zeichen zugehörigen Zeile der Tabelle ist in T1 bis TN Zellen angegeben, an welchen Stellen das der Adresse entsprechende Zeichen in dem gesuchten Zeichenmuster auftritt. Tritt das Zeichen beispielsweise an der vierten und siebten Stelle im Zeichenmuster auf, so ist in der zu diesem Zeichen gehörigen Zeile an der vierten und siebten Stelle eine "1" abgespeichert. Die übrigen Stellen (Zellen) dieser Zeile bleiben unbesetzt, d.h. dort wird eine "0" eingeschrieben. Die in Figur 3 realisierten Stufen S1 bis SN werden hier durch ein Register mit R1 bis RN Zellen ersetzt. Jede dieser Zellen entspricht einer der genannten Stufen. Die Zellen R1 bis RN müssen zu Beginn der Zeichensuche mit dem Wert "0" gefüllt werden. Der Ablauf der Zeichensuche sieht nun folgendermaßen aus:

Es wird ein Zeichen eingelesen und aufgrund des Wertes eine Zeile der Tabelle mit den Zellen T1 bis TN ausgewählt. Die Zelle RN wird neu berechnet, indem der vorhergehende Wert RN-1 konjunktiv mit dem Wert der Zelle TN verknüpft wird. Die Zelle RN-1 wird neu berechnet, indem die dazu vorhergehende Zelle RN-2 konjunktiv mit der Zelle TN-1 verknüpft wird, diese Berechnung wird so lange fortgeführt, bis die Zelle R1 den Inhalt der Zelle T1 zugewiesen bekommt. Wird festgestellt, daß RN den Wert "1" besitzt, so bedeutet dies, daß im Datenstrom das gesuchte Zeichenmuster gefunden ist. Der Suchvorgang ist beendet und es kann ein erneuter Suchvorgang gestartet werden.

**Ansprüche**

1. Verfahren zum Auffinden eines aus einer Anzahl von N Zeichen bestehenden Zeichenmusters in einem Datenstrom, **dadurch gekennnzeichnet,**

daß ein adressierbarer Speicher (38) vorgesehen ist, dessen Adressenteil (AT) die verschiedenen Zeichen (A, B, ...) des Zeichenmusters als Adressen enthält, daß im Speicher (38) als Dateninhalt hinter jeder Adresse ein binär codiertes Wort mit N Bits abgespeichert ist, das jeweils an der Stelle des Worts eine "1" hat, an der das der zugehörigen Adresse entsprechende Zeichen im Zeichenmuster auftritt, während an den übrigen Stellen im Wort eine "0" steht, daß die Zeichen des Datenstroms zur Adressierung des Speichers (38) verwendet werden, daß das unter der Adresse abgespeicherte Wort an N Stufen (S1 bis SN) eines Schieberegisters (20) parallel angelegt wird, daß ausgenommen die erste Stufe (S1) des Schieberegisters (20) vorgeschaltete UND-Gatter (22 bis 34) aufweist, wobei die beiden Eingänge der UND-Gatter einerseits mit dem Ausgang der vorhergehenden Stufe und andererseits mit der zugehörigen Stelle des Datenteils des Speichers (38) in Verbindung stehen, so daß eine "1" von der ersten Stufe (S1) bis zur N-ten Stufe weitergegeben wird und dort das Auffinden des gesuchten Zeichenmusters im Datenstrom kennzeichnet.

2. Verfahren nach Anspruch 1, **dadurch gekennzeichnet**, daß bei mehreren Adressen in den dort abgelegten Wörtern eine "1" an der gleichen Stelle des Wortes steht, wenn die entsprechenden Zeichen im Zeichenmuster wahlweise zugelassen sind.

3. Verfahren nach einem der Ansprüche 5 oder 6, **dadurch gekennzeichnet**, daß an der Stelle der binär codierten Wörter in sämtlichen möglichen Adressen eine "1" steht, an der im gesuchten Zeichenmuster ein beliebiges Zeichen zugelassen ist.

4. Verfahren nach einem der Ansprüche 1 bis 3, **dadurch gekennzeichnet**, daß der Datenstrom die zu prüfenden Zeichen in binär codierter Form enthält, und daß jedes der Zeichen auf eine zugehörige Zeichenadresse des Speichers (38) hinweist.

5. Verfahren zum Auffinden eines vorgegebenen, aus einer Anzahl von N Bits bestehenden Bitmusters in einer Bitfolge, wobei das Bitmuster für den durchzuführenden Suchvorgang in einem Speicher abgelegt ist, **dadurch gekennzeichnet**, daß bei Übereinstimmung eines in der Bitfolge auftretenden Bits mit dem ersten Bit des Bitmusters von der ersten Stufe (S1) eines Schieberegisters (20) eine diese Übereinstimmung kennzeichnende Kennung abgegeben wird, daß die Kennung bei jedem weiteren Bit der Bitfolge zur jeweils nächsten Stufe (S2, ...SN) übertragen wird, solange Übereinstimmung zwischen den nacheinander auftretenden Bits der Bitfolge und den nacheinander im Bitmuster enthaltenen Bits besteht, wobei die N-te Stufe (SN) durch Abgabe der Kennung das Ende eines aufgefundenen Bitsmusters anzeigt, daß im Speicher (18) des zu suchenden Bitmusters an der Adresse "1" und das dazu komplementäre Bitmuster an der Adresse "0" abgespeichert wird, daß die auftretenden Bits der binär codierten Bitfolge die Adresse bestimmen, aus der das dort abgelegte Bitmuster ausgelesen und parallel zu Eingängen des Schieberegisters (20) übertragen werden, daß ausgenommen dem Eingang der ersten Stufe (S1) den übrigen Eingängen der Stufen (S2 bis SN) UND-Gatter (22 bis 34) vorgeschaltet sind, deren beiden Eingänge einerseits mit dem Ausgang der vorhergehenden Stufe und andererseits mit dem der Stufe zugeordneten Ausgang des Speichers (18) verbunden sind, so daß die Kennung "1" von der ersten Stufe (S1) zu nachfolgenden Stufen (S2 bis SN) bei ununterbrochener Übereinstimmung zwischen dem zu suchenden Bitmuster und den Bits der ankommenden Bitfolge im Bittakt an die jeweils nächste Stufe weitergegeben wird.

6. Verfahren nach Anspruch 5, **dadurch gekennzeichnet**, daß im Speicher (18) an der Stelle des Bitmusters, an der sowohl eine "0" als auch eine "1" zugelassen sein soll, unter beiden Adressen eine "1" abgespeichert ist.

7. Verfahren nach einem der Ansprüche 5 oder 6, **dadurch gekennzeichnet**, daß das Schieberegister (20) eine der Anzahl N der Bits des Bitmusters entsprechende Anzahl von Stufen hat.

8. Schaltungsanordnung zur Durchführung eines Verfahrens zum Auffinden eines Bitmusters oder eines Zeichenmusters in einem Datenstrom gemäß einem der vorhergehenden Ansprüche, **dadurch gekennzeichnet**, daß das Schieberegister (20) aus einer Anzahl von N D-Flip-Flops besteht, die N Stufen (S1 bis SN) des Schieberegisters (20) bilden, und daß den D-Flip-Flops der zweiten und der folgenden Stufen jeweils ein UND-Gatter (22 bis 34) vorgeschaltet ist, bei dem der eine Eingang mit dem Ausgang des D-Flip-Flops der vorhergehenden Stufe verbunden ist und der andere Eingang mit der zugeordneten Stelle des Speicherausgangs verbunden ist.

Wandel und Goltermann GmbH & Co    Bild 1 v. 4    A 281/EU

EP 0 408 936 A2

DL

Interface ~10

12~  14~  Takt

~16  D Q  R

AT  DT

Adresse | Inhalt | ~18

| Adresse | Inhalt | | | | | |
|---|---|---|---|---|---|---|
| 0 | 1 | 0 | 1 | ----- | 0 | 0 |
| 1 | 0 | 1 | 0 | ----- | 1 | 1 |

20

RESET ~36

V1    D Q  R   S1

V2    & 22   D Q  R   S2

V3    & 26   D Q  R   S3

VN-1  & 30   D Q  R   SN-1

VN    & 34   D Q  R   SN

Nouvellement déposé

Wandel & Goltermann GmbH & Co    Bild 2 v. 4    A 281/EU

8

BEGINN

Bit einlesen

Bit = 1 — nein — ja

| $T_1$ | $T_2$ | $T_3$ | Tabelle | $T_N$ |
|---|---|---|---|---|
| 0 | 1 | 0 | ----------- | 0 |
| 0 | 0 | 1 | ----------- | 0 |

| $R_1$ | $R_2$ | $R_3$ | Register | $R_N$ |
|---|---|---|---|---|
| 0 | 1 | 0 | ----------- | 0 |

$$R_N := R_{N-1} \wedge T_N$$
$$R_{N-1} := R_{N-2} \wedge T_{N-1}$$
$$\vdots$$
$$R_2 := R_1 \wedge T_2$$
$$R_1 := T_1$$

$R_N = 1$ — nein — ja

Sequenz gefunden

ENDE

Wandel und Goltermann GmbH & Co          Bild 3 v. 4          A 281/EU

BEGINN

Zeichen einlesen
Zeiger:=Zeichen

Register $R_1$ $R_2$ $R_3$ ... $R_N$

Tabelle $T_1$ $T_2$ $T_3$ ... $T_N$

$$R_N := R_{N-1} \wedge T_N$$
$$R_{N-1} := R_{N-2} \wedge T_{N-1}$$
$$\cdots$$
$$R_2 := R_1 \wedge T_2$$
$$R_1 := T_1$$

$R_N = 1$

nein

ja

Sequenz gefunden

ENDE

Wandel & Goltermann GmbH & Co          Bild 4. v. 4          A 281/EU

10